# EUROPÄISCHE PATENTSCHRIFT

(11) **EP 0 674 559 B1**
(45) Veröffentlichungstag und Bekanntmachung des Hinweises auf die Patenterteilung: **16.07.1997**
(21) Anmeldenummer: 94900052.5
(22) Anmeldetag: 18.11.1993
(51) Int. Cl.: B23B 27/14

(54) **SCHNEIDEINSATZ**
CUTTING INSERT
PLAQUETTE DE COUPE

(30) Priorität: 21.11.1992 DE 4239235
(43) Veröffentlichungstag der Anmeldung: 04.10.1995
(73) Patentinhaber: Widia GmbH, 45145 Essen (DE)
(72) Erfinder: AGUSTIN PAYA, José, D-45479 Mülheim (DE)
(74) Vertreter: Vomberg, Friedhelm, Dipl.-Phys.
(86) Internationale Anmeldenummer: DE9301110
(87) Internationale Veröffentlichungsnummer: WO9412304

(56) Entgegenhaltungen:
- EP-A- 0 181 844
- EP-A- 0 491 670
- DE-A- 2 231 631
- DE-A- 4 018 043
- FR-A- 1 520 293
- FR-A- 2 475 438
- METALWORKING PRODUCTION Bd. 136, Nr. 7 , Juni 1992 , LONDON GB Seite 26 XP000275724 '+50% metal feed rates'

## Beschreibung

Die Erfindung betrifft einen Schneideinsatz mit mindestens einer Spanbrechernut, mit erhabenen Spanformelementen in Form von die Spanleitnut oder -nuten zumindest teilweise überbrückenden Längsrippen.

Die DE 28 45 211 A1 beschreibt einen solchen Schneideinsatz mit einer Spanleitnut, die durch mehrere Ausnehmungen in Nachbarschaft zur Schneidkante gebildet wird. Die Ausnehmungen besitzen einen vorgegebenen Krümmungsradius, der einen Überlappungsbereich zwischen benachbarten Ausnehmungen bestimmt. Die Ausnehmungen sind - in einer Draufsicht betrachtet - im wesentlichen kreisförmig, oval oder parabolisch gekrümmt.

Bereits in der DE 16 02 864 B2 wird zur besseren Führung und Brechung des ablaufenden Spanes über einen größeren Zerspanungsbereich vorgeschlagen, die Schneidkanten zwischen den Schneidecken in einem konkaven Bogen verlaufen und die innere Flanke der Spanbrechernut steil zu der jeweiligen Auflage-Deckfläche (Plateau) des Schneideinsatzes ansteigen zu lassen.

Die DE 25 44 991 C2 beschreibt einen Schneideinsatz, der mehr als zwei sich terrassenartig entlang der Schneidkante erstreckende Spanbrecherstufen besitzt, deren jede Stufenkante über ihre Länge gesehen in sich gewellt ist. Mit dieser Ausführungsform will man auf andere Weise erreichen, daß lange Wirrspäne vermieden werden, bei dem letzten Schneideinsatz dadurch, daß optimal viele und in unterschiedlichen Richtungen wirksame, über die Spanbreite variierende Spanformdrücke auf den Span wirksam werden, so daß dieser kreuz und quer verformt werden soll. Bei beiden bisher zitierten Ausführungsformen kann das gesetzte Ziel der gewünschten Kurzspanbildung jedoch nur unzureichend erreicht werden. Aus den EP 0 168 555 A1 sowie EP 0 222 317 A1 sind auch bereits Schneideinsätze mit einer an die Schneidkante anschließenden Fase und einer parallel zu der Schneidkante und der Fase verlaufenden Spanleitnut und einem erhabenen, die Fase deutlich überragenden Mittelteil bekanntgeworden, wobei in der Anstiegsflanke zum Mittelteil jeweils kugelsegmentartige Vorsprünge angeordnet sind. Die DE 34 31 601 A1 beschreibt einen Schneideinsatz mit einer ersten zylinderförmigen Spanleitnut von gleichmäßiger Breite und einer zweiten zylinderförmigen Spanleitnut, deren Querschnitt einen größeren Radius, jedoch eine geringere Tiefe als die erste Spanleitnut aufweist.

Der Schneideinsatz nach der EP 0 414 241 A2 besitzt Einkerbungen sowohl an der Freifläche als auch an der Spanfläche, die im Bereich der Schneidkante jeweils ineinander übergehen, wodurch die Schneidkante im Bereich der Einkerbungen gegenüber den übrigen Schneidkantenbereichen zurücktritt. Die jeweilige Trapezform ist scharfkantig ausgeführt, weshalb die Zielsetzung hoher Standzeiten nur bedingt erreicht werden kann. Darüber hinaus ist nach wie vor die beim Spanablauf auf der Spanfläche auftretende Reibung sehr hoch. Nachteiligerweise kann der in der genannten Druckschrift dargestellte Schneideinsatz auch nur für einen bestimmten Fertigungseinsatz verwendet werden.

Um auch bei stark differierenden Vorschüben bzw. Schnittiefen sowie Schnittgeschwindigkeiten ein ausgeglichenes gutes Spanbildungsverhalten zu gewährleisten, ist ferner in der EP 0 278 083 A1 vorgeschlagen worden, in dem sich auf der Spanfläche rechtwinklig zur Schneidkante an die Fase anschließenden Bereich einen Spanwinkel von mehr als 30° vorzusehen, wobei der Spanwinkel mit zunehmendem Abstand von der Fase kleiner wird und in den zwischen den Schneideckenbereichen liegenden Spanflächenbereichen des Schneidkörpers in Spanablaufrichtung verlaufende und mit Seitenabstand nebeneinander angeordnete Spanrippen aus der Spanfläche herausragend vorzusehen, zwischen denen weitere Erhebungen mit Auflauframpen liegen. Im Eckenbereich befinden sich drei nebeneinander angeordnete Graterhebungen, deren beide äußeren mit ihren Gratlängsachsen parallel zu den ihnen benachbarten Spanrippen verlaufen.

Die EP 0 143 758 besitzt langgestreckte Rippen, die im Querschnitt trapezförmig sind und parallel zur Schneidkante verlaufen. Diese Rippen werden durch Mulden unterbrochen.

Es ist Aufgabe der vorliegenden Erfindung, einen Schneideinsatz, insbesondere als Wendeschneidplatte, vorzuschlagen, der sowohl bei kleinen als auch bei großen Vorschüben und Schnitttiefen einsetzbar ist, und bei dem die durch den ablaufenden Span verursachte Reibungskraft möglichst gering gehalten wird, um einen frühzeitigen Verschleiß ebenso zu verhindern wie das Auftreten unerwünschter Nebeneffekte, wie z.B. durch dynamische Kräfte verursachte Vibrationen, und um einen weichen Schnitt zu gewährleisten.

Diese Aufgabe wird durch den im Anspruch 1 beschriebenen Schneideinsatz gelöst. Der Vorteil dieses Schneideinsatzes besteht darin, daß die Längsrippen zur Spanformung dienen, die sich plastisch derart vollzieht, daß durch das Hinübergleiten des Spanes über die Rippen Sicken im Span entstehen, die zu einer Spanversteifung führen, so daß der Span leichter brechen kann. Zusätzlich sind jedoch Spanleitelemente vorgesehen, die der weiteren gezielten Spanführung dienen, wobei der Kontaktbereich zwischen Span und Spanfläche kleingehalten wird, um die Reibung gering zu halten und um eine optimale Kühlung während des Einsatzes zu garantieren. Vorzugsweise sind die Längsrippen im wesentlichen senkrecht zur Schneidkante ausgerichtet.

Weiterentwicklungen der Erfindung, die insbesondere die Reibung beim Spanablauf minimieren helfen, sind in den Unteransprüchen 2 bis 10 beschrieben.

So ist zwischen der Schneidkante und der ersten Spanleitstufe eine Fase, vorzugsweise in gleichbleibender Breite entlang der Schneidkante vorgesehen. Diese Fase dient der Schneidkantenstabilisierung.

Vorzugsweise erstreckt sich die Längsrippe von der Schneidkante oder der Fase ausgehend bis zum Mittelteil. Hierdurch wird die Spanleitnut bzw. werden die Spanleitnuten überbrückt, so daß beim ablaufenden Span eine möglichst große plastische Querverformung eintreten kann.

Der Längsrippenkamm, der entweder flächig oder spitz zulaufend ausgebildet sein kann, kann im Längsquerschnitt gesehen verschiedene Ausgestaltungen besitzen, vorzugsweise wird er konvex, konkav oder wellig oder im wesentlichen geradlinig geformt sein, wobei die Längsrippe vorzugsweise im Bereich der Fase oder in der abfallenden Flanke der ersten Spanleitstufe ausläuft und an seinem hinteren, der Schneidkante abgewandten Ende im Grenzbereich des mittleren Plateaus bzw. im Bereich der Anstiegsflanke hierzu. Die beiden beschriebenen Auslaufbereiche definieren die Verbindungslinie für den Längsrippenkamm.

In einer Draufsicht betrachtet kann die Längsrippe eine rechteckige, trapezförmige, konische, hakenförmige, säulenartig spitz zulaufende, dreieckige oder in der Mitte eingeschnürte Form oder auch gewellte Seitenkonturen aufweisen. Bevorzugt läuft die Längsrippe in Richtung auf die Schneidkante spitz zu, so daß mit Fortschreiten des Spanes eine weitere Verformung gewährleistet ist. Die Längsrippe kann zur Seite hin bogenförmig abfallen, insbesondere in Form einer konvexen, konkaven oder gewellt ausgebildeten Flanke. Im oberen Dachbereich kann die Längsrippe gratförmig, eben oder mit einer leichten mittleren Mulde ausgeformt sein.

Die Längsrippen und die Spanleitelemente können sowohl bei Schneideinsätzen mit einem erhöhten ebenen Mittelteil (Plateau) als auch mit einem abgesenkten ebenen Mittelteil Verwendung finden. In entsprechender Weise wird die Längsrippe eine ansteigende Verbindungslinie oder eine im wesentlichen abfallende Verbindungslinie besitzen, wobei letztere vorzugsweise konvex bogenförmig verläuft.

Die Spanleitelemente liegen jeweils quer zu den Längsrippen und weisen maximal deren Höhe auf, wobei vorzugsweise zwei oder mehr Spanleitelemente parallel zur Längsrippenmittelachse gesehen hintereinander angeordnet sind. Die schneidkantenentfernteren Spanleitelemente sollten jedoch größer sein als die schneidkantennäheren Spanleitelemente, so daß unterschiedlichen Schnittiefen beim Zerspanen Rechnung getragen werden kann. Grundsätzlich gilt für die Spanleitelemente, daß diese von den Längsrippen beidseitig quer auslaufen, wobei die Spanleitelemente von einfachen Konturen, wie Vierteln von Rotationsellipsoiden, Schaufelformen, Kugelsegmentformen, konvex abfallenden Trapezformen angefangen bis hin zu aufwendigeren Formen mit terrassenartigen Aufbau in konvexer, konkaver oder gewellter Form reichen.

Nach einer weiteren Ausführungsform der Erfindung sind mindestens zwei Spanleitelemente jeweils beidseitig der Längsrippe angeordnet und haben in Richtung der Schneidkante gesehen jeweils eine rampenförmige Anstiegsfläche, die mit einem steileren Böschungswinkel aus dem Rampenwinkel zur Seite hin und nach hinten auf der der Schneidkante abgewandten Seite abfällt. Vorzugsweise sind die Begrenzungskanten zur Seitenflanke und zur hinteren Flanke wellenförmig ausgebildet. Die hintere abfallende Flanke kann im Bereich der nächstfolgenden rampenförmigen Anstiegsfläche auslaufen.

Nach einer weiteren Ausführungsform ist die Basisflächenbreite jeder in gleicher Reihe liegenden Anstiegsfläche gleich groß oder die Anstiegsfläche verjüngt sich mit aufsteigender Höhe, wobei die Verjüngung vorzugsweise auf dem Längsrippenkamm endet.

Die Spanleitelemente sind nach einer Ausgestaltung der Erfindung als Querrippen ausgebildet, die sich beidseitig und vorzugsweise symmetrisch zur Längsrippenachse erstrecken. Die Querrippen sind vorzugsweise jeweils Viertel eines Rotationsellipsoiden.

Die maximale Querrippenhöhe oder die Querrippenlänge oder die Querrippenbreite steigt mit wachsender Entfernung zur Schneidkante an. Die Spanleitelemente sind im Querschnitt senkrecht zu ihrer Längsachse und parallel zur Längsrippenachse nach einer Ausgestaltung der Erfindung trapez- oder fächerförmig ausgebildet, wobei sie vorzugsweise als trapezförmige Spanleitelemente konvexe Anstiegs- und abfallende Flanken haben. Soweit die Spanleitelemente eine konvexe Seitenflanke aufweisen, läuft diese zur Spanfläche hin breiter werdend aus und ist am Ansatzpunkt zur Längsrippe bogenförmig rund oder spitz.

Nach einer weiteren Ausgestaltung können die Spanleitelemente im Querschnitt zu ihrer Längsachse und parallel zur Längsrippenachse schaufelartig rechtwinklig ausgebildet sein. Alternativ hierzu können die Spanleitelemente terrassenförmig hintereinanderliegend angeordnet sein, wobei jedes Spanleitelement eine Anstiegsflanke mit einer in Draufsicht zungenförmigen Oberfläche mit einem bogenförmigen Rand besitzt, der an eine durchgehende abfallende und seitliche Flanke angrenzt.

Ausführungsbeispiele der Erfindung sind in den Zeichnungen dargestellt. Es zeigen
- Fig. 1: eine perspektivische Ansicht eines viereckigen Schneideinsatzes mit einer Fase, einer Spanleitnut und einem Mittelplateau sowie Längsrippen und Spanleitelementen,
- Fig. 2a bis h: Draufsichten auf Längsrippen unterschiedlicher Formgestaltungen,
- Fig. 3a bis e: jeweils perspektivische Ansichten von unterschiedlich geformten weiteren Längsrippen und
- Fig. 3f bis i: Schnittansichten längs der Linie C - C in Fig. 3a (also quer zur Längsrippe),
- Fig. 4a bis e: verschiedene Seitenansichten von Längsrippen-Konturen und Spanleitnuten - jeweils schematisch -,
- Fig. 5a bis e: schematische Ansichten von Ausschnitten aus Schneideinsätzen mit Darstellung unterschiedlicher Spanleitnuten und Ansatzpunkte der Längsrippen,
- Fig. 6a: eine Schnittansicht durch ein weiteres Ausführungsbeispiel der Erfindung im schneidkantennahen Bereich,
- Fig. 6b: eine Ansicht "X" entsprechend Fig. 6a,
- Fig. 7a: einen erfindungsgemäßen Schneideinsatz im Werkzeugeinsatz, dargestellt in einem Schnitt entlang der Linie B - B nach Fig. 1,
- Fig. 7b: eine perspektivisch vergrößerte Querschnittsdarstellung eines Spanes aus Fig. 7a gebildet,
- Fig. 8a bis d: jeweils verschiedene Ansichten von erfindungsgemäßen Ausführungsformen,
- Fig. 9: eine Schnittansicht einer Ausführungsform eines Schneideinsatzes mit abgesenktem Mittelteil,
- Fig. 10a bis d: Schneideinsätze mit unterschiedlichem Schneidkantenverlauf, jeweils in Seitansicht.

Polygone Schneideinsätze, im wesentlichen drei- und viereckige Schneideinsätze sind grundsätzlich nach dem Stand der Technik bekannt. Zur Erfindung gehörende Schneideinsätze besitzen mindestens eine Spanleitnut, hierin zumindest teilweise angeordnete Längsrippen und hierzu querliegende Spanleitelemente.

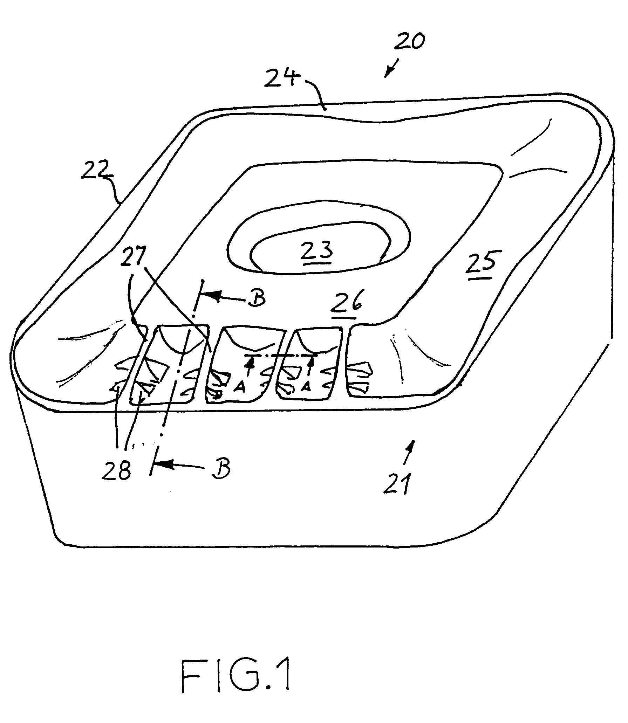

Der in Fig. 1 dargestellte Schneideinsatz 20 ist viereckig quadratisch ausgebildet und besitzt vier Schneidecken 21 sowie diese verbindende Schneidkanten 22. Zur Befestigung des Schneideinsatzes auf einem Halter dient ein mittleres Befestigungsloch 23. Der Schneideinsatz besitzt an jede Schneidkante 22 angrenzend eine Fase 24, die entweder gleichbleibend breit sein kann oder, wie im vorliegenden Fall dargestellt, zur Schneidkantenmitte hin verbreitert sein kann. Die Fase kann unter negativen, 0°- oder positiven Winkeln angeordnet sein. An die Fase angrenzend schließt sich eine Spanleitnut 25 an, die in eine Anstiegsflanke bis hin zum mittleren Plateau 26 übergeht. Dieses Plateau ist gegenüber den Schneidecken bzw. den Schneidkanten erhöht. In der Spanleitnut 25 und diese überbrückend befinden sich Längsrippen 27 sowie hierzu querliegende Spanleitelemente 28.

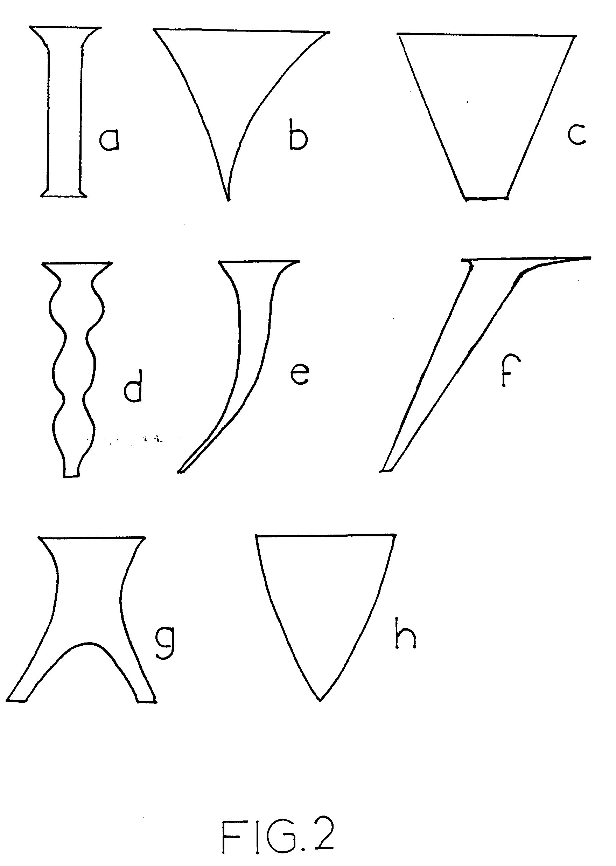

Wie Fig. 2 zu entnehmen ist, können die Längsrippen in einer Draufsicht unterschiedliche Konturen aufweisen, nämlich säulenartig (Fig. 2a), dreieckig konkav (Fig. 2b), trapezförmig (Fig. 2c), mit gewellten Randlinien (Fig. 2d), sichelartig (Fig. 2e), im wesentlichen trapezförmig mit gescherter Form (Fig. 2f), konkav mit am auslaufenden Ende zwei divergierenden Ästen (Fig. 2g) oder konvex-dreieckig (Fig. 2h). Vorzugsweise sind die spitzwinkligen Formen der Längsrippen so gerichtet, daß die Spitze zur Schneidkante hin zeigt.

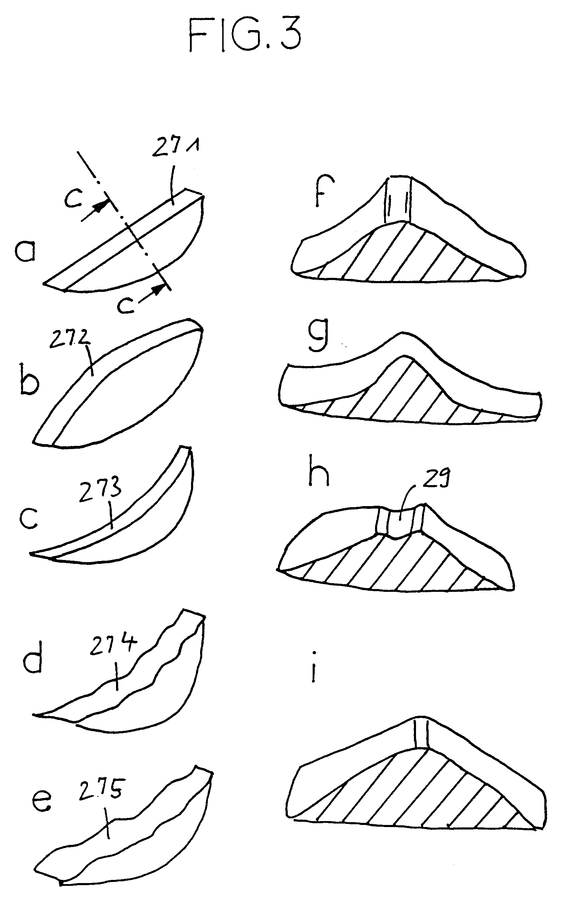

Weitere Darstellungen des Längsrippenkammes zeigt Fig. 3a bis e. Dieser kann entweder geradflächig eben (271), konvex (272), konkav (273) oder wellig (274 oder 275) mit unterschiedlicher Amplitude und Krümmung verlaufen.

Wie aus den Schnittansichten nach der Linie C - C zu erkennen, können die Längsrippen zur Seite, d.h. parallel zur Schneidkante hin, ebenflächig, konvex, konkav, nach oben spitz zulaufend oder über einen schmalen bzw. breiteren Grat hin ausgestaltet sein. Auch kann der Längsrippenkamm sattelförmig (Fig. 3h) mit einer Mulde (29) ausgestaltet sein.

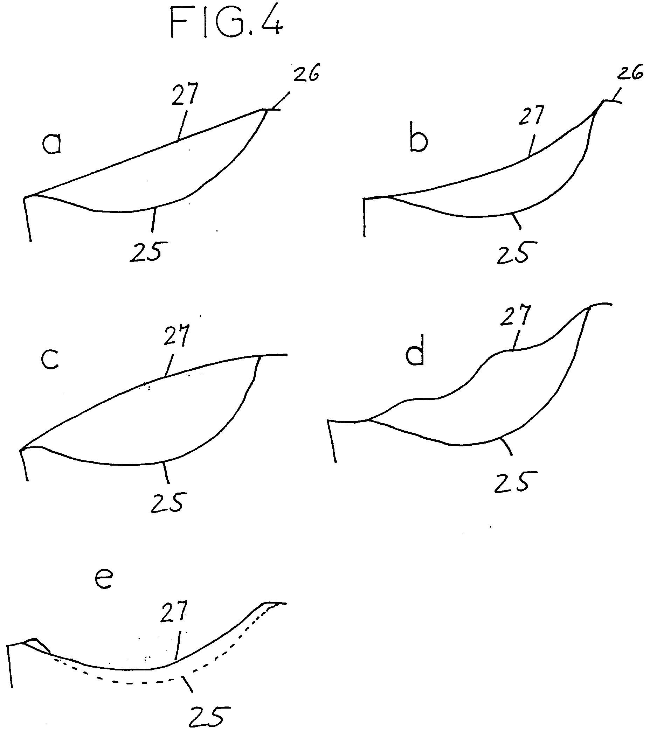

Fig. 4 zeigt jeweils schematische Seitenansichten der relativen Anordnung der Längsrippe in bezug auf die Spanleitnut (25). Nach Fig. 4a schließt sich an die Schneidkante eine kurze Fase an und hieran die Spanleitnut 25. Die Längsrippe 27 schließt nach Fig. 4a unmittelbar im Bereich der Fase an und reicht bis zum Grenzbereich der Anstiegsflanke der Spanleitnut zum Plateau 26. Die Rippe 27 besitzt nach Fig. 4a eine im wesentlichen geradlinige Kontur. Bei der Längsrippe 27 nach Fig. 4b ist die Kontur leicht konkav, wobei die Längsrippe etwa in den Übergangsbereich zwischen der Fase und der Spanleitnut 25 im vorderen Bereich des Schneideinsatzes und etwa im Grenzbereich der Anstiegsflanke der Spanleitnut 25 zum Plateau 26 im hinteren Bereich mündet.

Fig. 4c zeigt eine konvexe Längsrippe 27, die bis zur Schneidkante 22 reicht. Die Längsrippe 27 nach Fig. 4d besitzt eine wellige Oberflächenkontur, während die Längsrippe nach Fig. 4e ebenfalls konkav geformt ist, jedoch dergestalt, daß sie im vorderen schneidkantennahen Bereich als Nut in der Spanleitnut 25 ausgebildet ist und die Rippe 27 nur im mittleren und hinteren Bereich überragt.

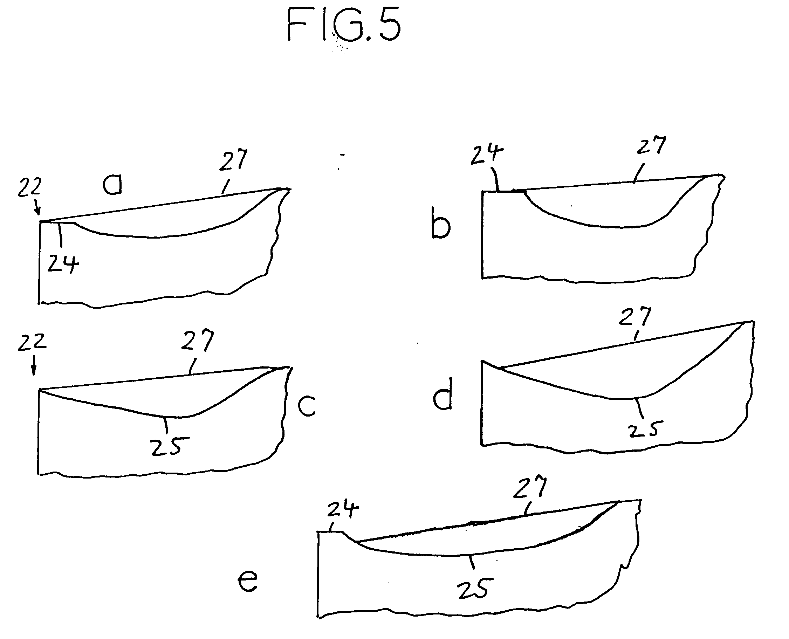

Wie aus Fig. 5 ersichtlich, können die Längsrippen entweder an der Schneidkante 22 auslaufen (Fig. 5a, c), unabhängig davon, ob eine Fase 24 vorgesehen ist oder die Spanleitnut 25 unmittelbar an die Schneidkante anschließt (Fig. 5c). Die Längsrippen können an ihrem vorderen zur Schneidkante 22 zugewandten Ende auch auf der Fase einmünden (Fig. 5b) oder, falls keine Fase 24 vorhanden ist, in der abfallenden Flanke der Spanleitnut 25 (Fig. 5d). Fig. 5e zeigt eine Ausführungsform, bei der trotz Fase 24 die Längsrippe 27 im abfallenden Flankenbereich der Spanleitnut 25 ausläuft.

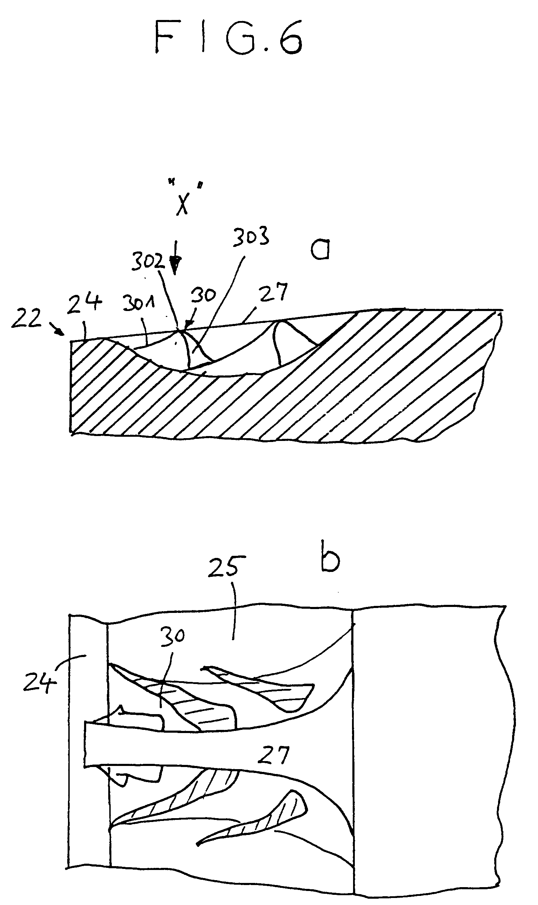

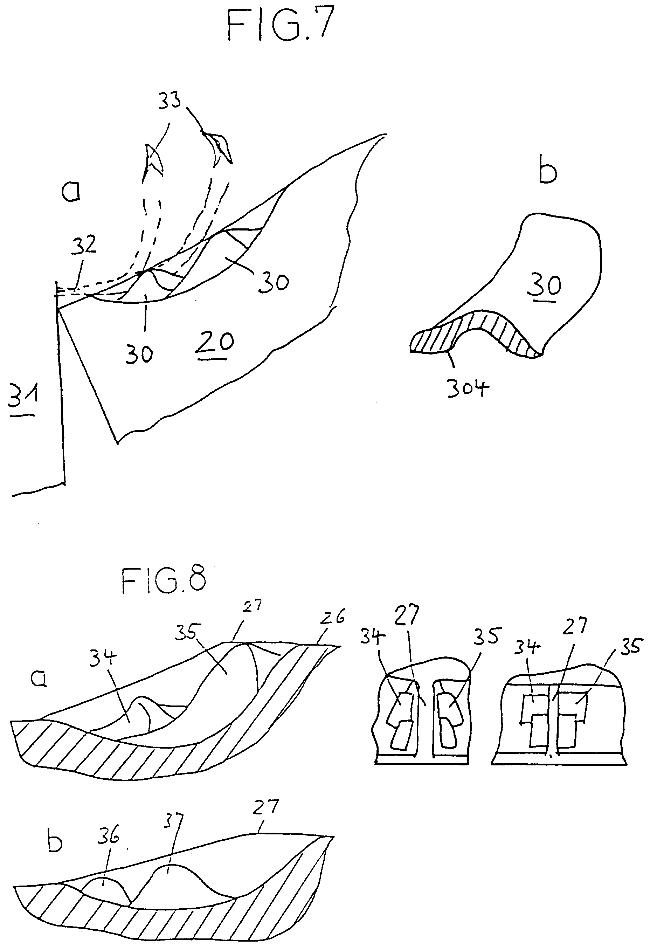

Anhand der Fig. 6 bis 9 werden im folgenden verschiedene Ausführungsformen der Spanleitelemente 28 erläutert, die jeweils gemein haben, daß sie von der Längsrippe 27 ausgehend einen abfallenden Teil bis auf den Grund der Spanleitnut 25 besitzen. Die Spanleitelemente 30 nach Fig. 6a und 6b besitzen eine rampenförmige Anstiegsfläche 301, die bis zu einem Scheitelpunkt 302 ansteigt, von wo aus mit einem steilen Böschungswinkel nach hinten (Fläche 303) und zur Seite eine abfallende Flanke anschließt. Die beiden Spanleitelemente 30, die parallel zur Rippenmittelachse hintereinander angeordnet sind, unterscheiden sich in ihrer Höhe, wobei der jeweilige Scheitelpunkt etwa in Höhe des Längsrippenkammes endet. Einen Schneideinsatz entsprechend Fig. 6a und 6b im Einsatz zeigt Fig. 7a. Beim Zerspanen eines Werkstückes entsteht ein Span 32, der je nach Vorschub auf das vordere oder hintere Spanleitelement 30 trifft, von wo er aus abgelenkt wird. Die hierbei entstehenden Kurzspäne 33 sind symbolisch angedeutet. Fig. 7b zeigt einen Querschnitt durch einen Span 32, wobei die schraffierte Fläche 304 den sinngemäßen Querschnitt durch den erzeugten Span darstellt.

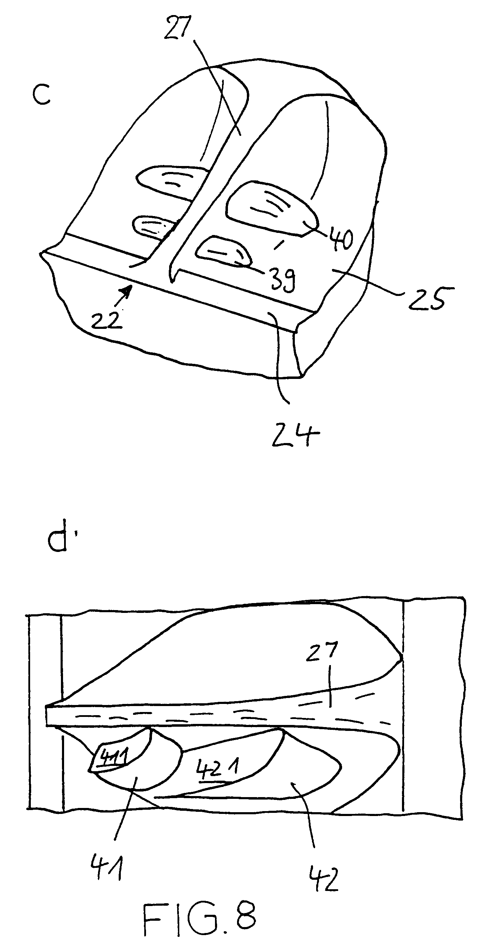

Weitere Ausführungsformen unterschiedlicher Spanleitelemente sind Fig. 8 zu entnehmen. So zeigt die Darstellung nach Fig. 8a zwei fächerförmige hintereinander angeordnete Spanleitelemente 34 und 35, die zwar ähnlich, jedoch unterschiedlich groß ausgestaltet sind. So endet das Spanleitelement 35 etwa in Höhe des Plateaus 26 bzw. des Längsrippenkammes 27. Im rechten Teil der Fig. 8a sind mögliche Querschnittsformen für die Spanleitelemente angedeutet, die von schaufelartig bis fächerartig reichen, ggf. auch trapezförmig, kugel- und rippenförmig sein können.

Die Spanleitelemente 36 und 37 nach Fig. 8b sind im wesentlichen kugelsegmentartig, während die Spanleitelemente 39 und 40 etwa die Form eines durch die Längsrippe 27 zerschnittenen halben Rotationsellipsoiden haben.

Die Spanleitelemente 41 und 42 nach Fig. 8d sind terrassenförmig aufgebaut und besitzen eine jeweils schaufelartige Anstiegsfläche 411 bzw. 421 bis hin zu einer oberen Kante, von der aus zur Seite und zum hinteren Teil hin eine steile Böschung anschließt. Der Übersichtlichkeit halber sind die Spanleitelemente 41 und 42 auf einer Seite fortgelassen.

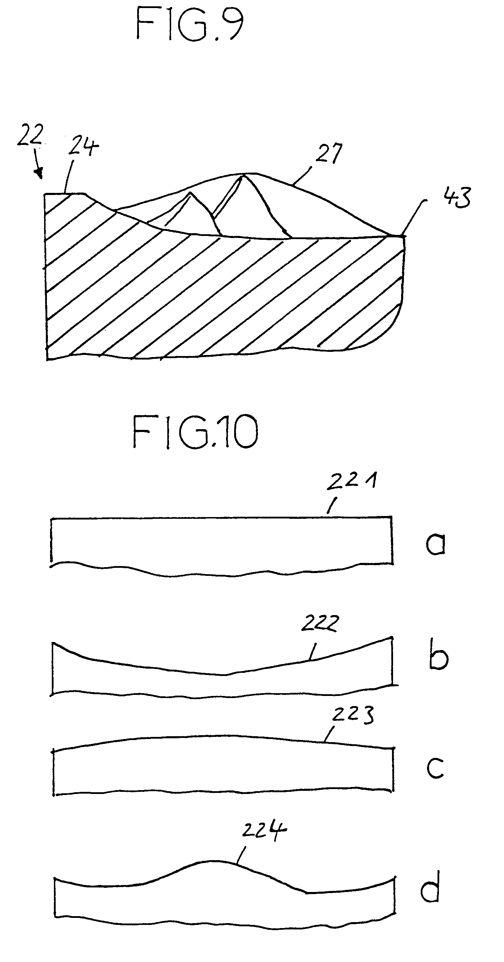

Die Darstellung nach Fig. 9 zeigt einen Schneideinsatz mit einem abgesenkten Mittelteil 43, weshalb sich die Längsrippe bogenförmig zur Spanflächenmitte hin erstreckt.

Fig. 10 zeigt mögliche Ausführungsformen für die Schneidkante 22, nämlich jeweils lineare Schneidkanten 221, konkave Schneidkanten 222, konvexe Schneidkanten 223 und wellenförmige Schneidkanten 224. Sämtliche Schneidkanten, Spanleitelemente, Längsrippen und Schneidplattentypen, mit oder ohne erhöhtem bzw. abgesenktem Mittelteil, die zuvor beschrieben worden sind, können miteinander kombiniert werden.

## Patentansprüche

1. Schneideinsatz (20) mit mindestens einer Spanleitnut (25) mit erhabenen Spanformelementen in Form von die Spanleitnut (25) oder -nuten (25) zumindest teilweise überbrückende Längsrippen (27),
**dadurch gekennzeichnet**,
daß die Längsrippen (27) mit zusätzlichen zur Längsrippenachse querliegenden Spanleitelementen (28) versehen sind.

2. Schneideinsatz nach Anspruch 1, dadurch gekennzeichnet, daß zwischen der Schneidkante (22) und der Spanleitnut (25) eine Fase (24), vorzugsweise entlang der Schneidkante (22) in gleichbleibender Breite, vorgesehen ist.

3. Schneideinsatz nach Anspruch 1 oder 2, dadurch gekennzeichnet, daß die Längsrippe (27) sich von der Schneidkante (22) oder der Fase (24) ausgehend bis zum Mittelteil (26, 43) erstreckt oder im Bereich der Fase (24) oder in der abfallenden Flanke der Spanleitnut (25) ausläuft.

4. Schneideinsatz nach einem der Ansprüche 1 bis 3, dadurch gekennzeichnet, daß der Längsrippenkamm ebenflächig (271), konvex (272), konkav (273) oder wellig oder im wesentlichen geradlinig ausgebildet ist.

5. Schneideinsatz nach einem der Ansprüche 1 bis 4, dadurch gekennzeichnet, daß die Längsrippe (27) in der Draufsicht (auf die Spanfläche) eine rechteckige, trapezförmige, konische, hakenförmige, säulenartig spitz zulaufende, dreieckige säbelförmige oder in der Mitte eingeschnürte Form oder gewellte Seitenkonturen aufweist.

6. Schneideinsatz nach Anspruch 5, dadurch gekennzeichnet, daß die Längsrippe (27) in Richtung auf die Schneidkante (22) spitz zuläuft.

7. Schneideinsatz nach einem der Ansprüche 1 bis 6, dadurch gekennzeichnet, daß die Längsrippe (27) zur Seite hin bogenförmig abfallende Flanken aufweist, wobei die Flanke vorzugsweise konvex, konkav oder gewellt ausgebildet ist.

8. Schneideinsatz nach einem der Ansprüche 1 bis 7, dadurch gekennzeichnet, daß die Längsrippe (27) einen gratförmigen, ebenen oder mit einer leichten mittleren Mulde versehenen Kamm aufweist.

9. Schneideinsatz nach einem der Ansprüche 1 bis 8, dadurch gekennzeichnet, daß die Spanleitelemente (28) maximal die Höhe der Längsrippen (27) aufweisen.

10. Schneideinsatz nach einem der Ansprüche 1 bis 9, dadurch gekennzeichnet, daß zwei oder mehr Spanleitelemente (28) - parallel zur Rippenmittelachse gesehen - hintereinander angeordnet sind, wobei das weiter von der Schneidkante (22) entfernt liegende Spanleitelement (28) größer als das benachbarte davorliegende ist.

## Claims

1. Cutting insert (20) with at least one chip-guiding groove (25) with raised chip-shaping elements at least partially bridging the chip-guiding groove (25) or grooves (25) and formed as longitudinal ribs (27),
characterized in that
the longitudinal ribs (27) are provided with additional chip-guiding elements (28) transverse to the longitudinal-rib axis.

2. Cutting insert according to claim 1, characterized in that a chamfer (24) is provided between the cutting edge (22) and the chip-guiding groove (25), preferably along the cutting edge (22) and having a uniform width.

3. Cutting insert according to claim 1 or 2, characterized in that the longitudinal rib (27) extends from the cutting edge (22) or the chamfer (24) to the central part (26, 43) or tapers off to the descending flank of the chip-guiding groove (25).

4. Cutting insert according to one of claims 1 to 3, characterized in that the longitudinal-rib crest is formed planar (271), convex (272), concave 273, or wavy or is generally straight.

5. Cutting insert according to one of claims 1 to 4, characterized in that the longitudinal rib (27) has a side contour seen in top view (to the chip surface) that is rectangular, trapezoidal, conical, hook-shaped, columnar, pointed, three-edge sword-shaped, and/or notched in the middle or wavy.

6. Cutting insert according to one of claims 1 to 5, characterized in that the longitudinal rib (27) is pointed toward the cutting edge (22).

7. Cutting insert according to one of claims 1 to 6 characterized in that the longitudinal rib (27) has laterally arcuately dropping flanks, whereby the flank is formed convex, concave, or wavy.

8. Cutting insert according to one of claims 1 to 7 characterized in that the longitudinal rib (27) has a burr-shaped, planar, and/or centrally slightly recessed comb.

9. Cutting insert according to one of claims 1 to 8, characterized in that the chip-guiding elements (28) are at most as high as the longitudinal ribs (27).

10. Cutting insert according to one of claims 1 to 9, characterized in that two or more chip-guiding elements (28) - seen parallel to the central rib axis - are arranged one behind the other, whereby the chip-guiding element (28) farther from the cutting edge (22) is bigger than the neighbouring one in front of it.

## Revendications

1. Insert de coupe (20) comprenant du moins une rainure (25) guidant le copeau avec des éléments élevés à former le copeau, sous forme de nervures longitudinales (27) jetant un pont, au moins en partie, sur la rainure (25) ou les rainures (25) guidant le copeau,
**caractérisé par le fait**
que les nervures longitudinales (27) sont pourvues d'éléments supplémentaires (28) guidant le copeau, qui se trouvent transversalement à l'axe des nervures longitudinales.

2. Insert de coupe selon la revendication 1, caractérisé par le fait qu'un chanfrein (24) est prévu entre le tranchant (22) et la rainure (25) guidant le copeau, de préférence le long du tranchant (22) et avec une largeur constante.

3. Insert de coupe selon la revendication 1 ou 2, caractérisé par le fait que la nervure longitudinale (27) s'étend depuis le tranchant (22) ou le chanfrein (24) jusqu'à la partie centrale (26, 43) ou qu'elle se termine dans la zone du chanfrein (24) ou dans le flanc descendant de la rainure (25) guidant le copeau.

4. Insert de coupe selon l'une des revendications 1 à 3, caractérisé par le fait que la crête de la nervure longitudinale est réalisée a surface plane (271), de manière convexe (272), de façon concave (273) ou de manière ondulée ou, pour l'essentiel, rectiligne.

5. Insert de coupe selon l'une des revendications 1 a 4, caractérisé par le fait que la nervure longitudinale (27) présente, dans une vue de dessus (sur la face de coupe), une forme rectangulaire, trapézoïdale, conique, une forme de crochet, une forme s'effilant de manière colonnaire, une forme triangulaire en forme de sabre ou une forme étranglée au milieu ou des contours latéraux ondulés.

6. Insert de coupe selon la revendication 5, caractérisé par le fait que la nervure longitudinale (27) s'éffile vers le tranchant (22).

7. Insert de coupe selon l'une des revendications 1 à 6, caractérisé par le fait que la nervure longitudinale (27) présente des flancs descendants vers le côté de façon arquée, le flanc est formé, de préférence, de manière convexe, concave ou ondulée.

8. Insert de coupe selon l'une des revendications 1 a 7, caractérisé par le fait que la nervure longitudinale (27) présente une crête en forme d'arête, plane ou pourvue d'une légère cavité centrale.

9. Insert de coupe selon l'une des revendications 1 a 8, caractérisé par le fait que les éléments (28) guidant le copeau présentent au maximum la hauteur des nervures longitudinales (27).

10. Insert de coupe selon l'une des revendications 1 à 9, caractérisé par le fait que deux ou plusieurs éléments (28) guidant le copeau - vus parallèlement a l'axe central de la nervure - sont disposés l'un derrière l'autre, l'élément (28) guidant le copeau, qui est situé plus loin du tranchant (22) étant plus grand que l'élément voisin se trouvant devant.
